# EUROPÄISCHE PATENTSCHRIFT

(11) **EP 2 213 859 B1**
(45) Veröffentlichungstag und Bekanntmachung des Hinweises auf die Patenterteilung: **30.03.2016**
(21) Anmeldenummer: 10000101.5
(22) Anmeldetag: 08.01.2010
(51) Int. Cl.: F02B 29/04, F02M 26/06

(54) **Verfahren zum Regeln eines Ladeluftkühlers**
Method for regulating a charge air cooler
Procédé destiné au réglage d'un refroidisseur d'air de suralimentation

(30) Priorität: 31.01.2009 DE 102009006966
(43) Veröffentlichungstag der Anmeldung: 04.08.2010
(73) Patentinhaber: Volkswagen Aktiengesellschaft, 38440 Wolfsburg (DE)
(72) Erfinder: Greiner, Michael, 39116 Magdeburg (DE); Heuck, Markus, 38114 Braunschweig (DE)

(56) Entgegenhaltungen:
- WO-A1-2006/079180
- DE-A1- 3 517 567
- DE-A1-102007 005 393
- DE-C1- 19 936 595

## Beschreibung

Die Erfindung betrifft ein Verfahren zum Regeln eines, in einem Kühlmittelkreislauf einer Brennkraftmaschine angeordneten, die Ladeluft der Brennkraftmaschine kühlenden Ladeluftkühlers nach dem Oberbegriff des Patentanspruches 1.

Die durch den Ladeluftverdichter angesaugte Luft wird üblicherweise auf eine Temperatur von etwa 180°C erwärmt. Mit der steigenden Temperatur dehnt sich die angesaugte Ladeluft aus, wodurch eine Verringerung des Sauerstoffanteils je Volumeneinheit bewirkt wird. Diese Verringerung des Sauerstoffanteils bedingt eine geringere Leistungssteigerung des Motors. Um diesem Effekt entgegenzuwirken, werden insbesondere bei Kraftfahrzeugmotoren auch die eingangs erwähnten Ladeluftkühler verwendet. Der Einsatz eines Ladeluftkühlers stellt sicher, dass die aufgeheizte Luft heruntergekühlt und dadurch dem Verbrennungsvorgang im Zylinder eine höhere Ladungsdichte zur Verfügung gestellt wird. Durch den höheren Sauerstoffgehalt der Ladeluft pro Volumeneinheit ist es somit möglich, eine größere Kraftstoffmenge zu verbrennen. Gleichzeitig wird durch die Ladeluftkühlung die Stickoxidemission reduziert, da aufgrund der geringeren Ladelufteintrittstemperatur auch niedrigere Verbrennungstemperaturen erzielt werden.

Insbesondere bei der Niederdruck-Abgasrückführung werden durch stärker abgesenkte Ladungstemperaturen geringere Stickoxidemissionen erreicht als bei der Hochdruck-Abgasrückführung. Dieser Kühfeffekt wird erzielt, indem das zuvor durch einen Abgaskühler geleitete Abgas zusammen mit der Ansaugluft vor dem Verdichter eingeleitet wird. Die komprimierte Ladeluft wird dann durch den Ladeluftkühler geleitet und schließlich stark gekühlt der Verbrennung zugeführt. Bei einem ausschließlichen Betrieb einer solchen Niederdruck-Abgasrückführung kann das im Abgas enthaltene Wasser im Ladeluftkühler kondensieren, und bei Akkumulation den Ladeluftkühler und die Brehnkraftmaschine beschädigen.

In diesem Zusammenhang ist aus der DE 102 46 807 A1 ein Kühlsystem für Brennkraftmaschinen mit indirekter Ladeluftkühlung einer Hochdruck-Abgasrückführung bekannt. Das Problem der Wasserkondensation existiert bei der Hochdruck-Abgasrückführung nicht. Die Druckschrift zeigt jedoch zwei Kühlkreisläufe zur Kühlung der Brennkraftmaschine, die auf unterschiedlichen Temperaturniveaus betreibbar sind. Dabei ist in einem Hauptkühlkreislauf eine Kühlmittelförderpumpe angeordnet, die hinsichtlich des zu fördernden Volumenstroms, der Förderleistung und/oder des Förderdrucks verstellbar ist. Ein Ladeluftkühler zum Kühlen der der Brennkraftmaschine zugeführten Ladeluft ist ebenfalls in dem Hauptkühlkreislauf angeordnet.

In Ergänzung zu der zuvor zitierten Veröffentlichung ist beispielsweise aus der DE 10 2006 010 247 ein Kühlsystem für aufgeladene Kraftfahrzeugmotoren bekannt, bei dem die Ladeluftkühleinheit einen Ladeluftzwischen- und einen Ladelufthauptkühler aufweist. Da die Ladeluft in diesem Fäll zweistufig verdichtet wird, wird mit dem Ladeluftzwischenkühler die Ladeluft zwischen dem Niederdruckverdichter und dem Hochdruckverdichter gekühlt, während der Ladelufthauptkühler die Ladeluft abkühlt, die den Hochdruckverdichter verlassen hat.

Ein Verfahren der eingangs genannten Art ist bereits aus der WO 2006/079180 A1 bekannt, bei dem während des Betriebes der Brennkraftmaschine die Kühlleistung des Ladeluftkühlers in Abhängigkeit zweier Schwellenwerte der Ladelufttemperatur des Ladeluftkühlers eingestellt wird. Ein Sensor erfasst hierzu die Temperatur der komprimierten Ladeluft vor dem Ladeluftkühler.

Weiterhin ist aus der DE 199 36 595 A1 ein Verfahren zum Betrieb einer mittels Abgasturbolader aufgeladenen Brennkraftmaschine bekannt, wobei durch Öffnen einer Abgasrückführungsleitung ein Teilstrom des Abgases der Ladeluft beimischbar ist und eine Reglereinheit die Abgasrückführungsrate des anteilig beigemischten Abgasstromes einem vorgegebenem Sollwert angleicht. Die Abgasrückführungsrate hängt dabei von dem Druckgefälle zwischen dem Abgasdruck vor der Turbine und dem Ladedruck ab und ist über eine einstellbare Türbinengeometrie beliebig variierbar.

Die DE 10 2006 044 820 A1 beschreibt ein Verfahren zum Kühlen einer Brennkraftmaschine mit Ladeluftzufuhr, das über einen ersten und einen zweiten Kühlkreislauf verfügt, von denen der erste Kühlkreislauf auf einem höheren Temperaturniveau als der zweite Kühlkreislauf betrieben wird und bei dem die Ladeluftzufuhr zumindest eine Ladeluftkühleinheit aufweist, die thermisch an den zweiten Kühlkreislauf, in dem ein Kühlmitteldurchsatz regelbar ist, gekoppelt ist. In dem zweiten Kühlkreislauf ist dabei wenigstens ein Abschaltelement vorgesehen, mit dem während eines Betriebs der Brennkraftmaschine in Abhängigkeit eines Betriebsparameters oder einer Zustandsänderung wenigstens einer Fahrzeugkomponente und/oder anderer Einflussgrößen der Kühlmitteldurchsatz im zweiten Kühlkreislauf auf Null drosselbar, also abschaltbar ist.

Zusammenfassend ist festzustellen, dass zur Minimierung der Emissionen heute zunehmend Niederdruckabgasrückführungssysteme verwendet werden. Hierbei wird die abgashaltige Ladeluft mittels des Verdichters komprimiert und durch den Ladeluftkühler zur Brennkraftmaschine geführt. Um eine möglichst hohe Ladungsdichte sicherzustellen, muss der Ladeluftkühler eine hohle Kühlleistung haben. Ideal ist eine gleich bleibende Temperatur der Ladeluft von zirka 20 bis 40°C, abhängig von der aktuellen Temperatur der Brennkraftmaschine und den Umweltbedingungen. Nachteilig an den zuvor beschriebenen Verfahren ist dass es auch Betriebszustände der Brennkraftmaschine gibt, in denen eine hohe Kühlleistung des Ladeluftkühlers unerwünscht ist, weil die Gefahr der Kondensation und Vereisung des Ladeluftkühlers besteht, wenn der Taupunkt des Wassers in der abgashaltigen Ladeluft unterschritten wird beziehungsweise weil dem System Warme entzogen wird. Letzteres geschieht gerade in der Startphase der Brennkraftmaschine, was eine schnelle Aufheizung der Brennkraftmaschine auf die Betriebstemperatur verhindert und zu schlechteren Kaltstartemissions- und Verbrauchswerten führt.

Der Erfindung liegt somit die Aufgabe zugrunde, ein Verfahren zum Regeln eines, in einem Kühlmittelkreislauf einer Brennkraftmaschine eines, insbesondere mit Abgasrückführung ausgerüsteten Fahrzeugs angeordneten, die Ladeluft der Brennkraftmaschine kühlenden Ladeluftkühlers zu schaffen, bei dem in bestimmten, auswählbaren Betriebszuständen ein Auskühlen der Brennkraftmaschine und die Bildung von Kondensat in der Ladeluft zuverlässig verhindert wird.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren vorgesehen, bei dem die Brennkraftmaschine mit einer Abgasrückführung ausgerüstet und in einem Fahrzeug angeordnet ist und bei dem die Ladeluft mit dem rückgeführten Abgas vermischt wird, wobei der Ladeluftkühler in zwei Betriebszuständen, mit maximaler Kühlleistung oder abgeschaltet, betrieben wird. Indem der Ladeluftkühler in zwei Betriebszuständen, mit maximaler Kühlleistung oder abgeschaltet, betrieben wird, ist es möglich, die Trägheit des Kühlsystems gegenüber dem Stand der Technik herabzusetzen. Vorteilhaft ist es, dass der Betriebszustand des Ladeluftkühlers mittels eines Zweipunktreglers eingestellt wird. Hierdurch wird es möglich, trotz der Trägheit der Regelstrecke die Temperierung der Ladeluft schnell entsprechend den Anforderungen einzustellen. Damit kann über die Schalthysterese berücksichtigt werden, dass die durch die Kühlung abgeführte Wärme pro Zeiteinheit in weiten Motorkennfeldbereichen größer ist als die in der gleichen Zeiteinheit durch das Abgas und die Verdichtung der Ladeluft zugeführte Wärme. Somit erfolgt der Abkühlvorgang schneller als der Aufheizvorgang. Dabei wechselt die Leistung des Ladeluftkühlers mittels des Zweipunktreglers zwischen den Zuständen 0 Prozent und 100 Prozent.

Die Ladelufttemperatur wird auf den Sollwert eingestellt, in dem zum Aufheizen der Ladeluft die in den Ladeluftkühler luftseitig eingetragene Abgaswärme und die bei der Druckerhöhung im Verdichter eingetragene Wärme verwendet wird. Ist die dabei entstehende Temperatur der Ladeluft größer als ein erster Schwellenwert, wird dem Ladeluftkühler durch Einschalten der Kühlung Wärme entzogen. Ist die entstehende Temperatur der Ladeluft niedriger als ein zweiter Schwellenwert, bleibt die Kühlung des Ladeluftkühlers abgeschaltet, bis der Sollwert erreicht ist. Die Kühlleistung des Ladeluftkühlers wird mittels einer regelbaren Umwälzpumpe eingestellt.

Der Sollwert der Ladelufttemperatur wird in Abhängigkeit einer Temperatur der Umgebungsluft ; des Fahrzeugs und einer Temperatur des Kühlmittels sowie des Betriebspunktes festgelegt. Die Kühlung beginnt erst dann einzusetzen, wenn ein Überschwinger bereits eingetreten ist. Die Kühlung wird über eine Hysterese daraufhin nur so lange aufrechterhalten, bis der Überschwinger um einen festlegbaren Wert abgesunken ist. Hierbei sind weitere Parametrierungen nicht notwendig.

Vorteilhaft ist es, dass beim Überschreiten eines ersten Schwellenwertes der Ladelufttemperatur der Ladeluftkühler mit maximaler Kühlleistung betrieben wird. Dieser, erste Schwellenwerte ist beispielsweise ein Überschwinger von 4°C über die Soll-Temperatur der Ladeluft. Darüber hinaus ist es günstig, dass beim Unterschreiten eines zweiten Schwellenwerts der Lädelufttemperatur der Ladeluftkühler abgeschaltet wird. Dieser zweite Schwellenwert ist festgelegt auf ein Absinken des Überschwingers um beispielsweise. 0,5°C. Hierdurch wird es möglich, mittels der Totzeit der Regelstrecke einen erwünschten Sollwertverlauf der Ladelufttemperatur einzustellen.

Dieses Regelverfahren ermöglicht, dass bei gewöhnlicher Fahrweise eine Akkumulation von Wasser und/oder Eis in dem Ladeluftkühler und den mit diesem verbundenen Leitungswegen der Ladeluft ausgeschlossen ist. Dennoch ist es denkbar, dass beispielsweise durch ausgeprägten Kurzstreckenbetrieb bei tiefen Außentemperaturen auch ohne aktive Ladeluftkühlung der Taupunkt von Wasser nicht überschritten wird. Für diesen Fall wird der Wassereintrag in dem Ladeluftkühler durch ein Wasserbeladungsmodell überwacht. Dieses Modell berücksichtigt auch den Wasserabtrag.

Vorteilhaft ist es, dass mittels des Wasserbeladungsmodells die im Ladeluftkühler gespeicherte Wassermasse insbesondere in Abhängigkeit der Menge der zugeführten frischen Umgebungsluft, der Temperatur der Umgebungsluft, der Temperatur der Ladeluft sowie der Höhe der Abgasrückführungsrate berechnet wird. Da die Kondensatbildung maßgeblich von dem rückgeführten Abgas bestimmt wird, ist es günstig, dass in Abhängigkeit des Wasserbeladungsmodells - also der rechnerisch vorhandenen Wassermenge - die Abgasrückführate und der Sollwert der Ladelufttemperatur angepasst wird. Hierdurch wird es möglich, eine weitere Kondensat und/oder Eisbildung zu verhindern und so die Bauteile im Ladeluftstrom zu schützen.

Wurde die Abgasrückführung zur Verhinderung von Kondensatbildung angepasst, so ist es günstig, dass dieser Zustand erst wieder aufgehoben wird, wenn die modellierte Wassermasse einen unkritischen Schwellenwert unterschritten hat. Vorteilhaft ist es, wenn während dieser Phase der Sollwert der Ladelufttemperatur erhöht wird, da dadurch das Eis schneller aufgelöst und das Wasser weitestgehend verdampft ist. Dieser Effekt der Wasserreduktion wird in dem Wasserbeladungsmodell berücksichtigt. Ermittelt das Wasserbeladungsmodell einen eis- und kondensatfreien Zustand, wird die Anpassung wieder zurückgenommen.

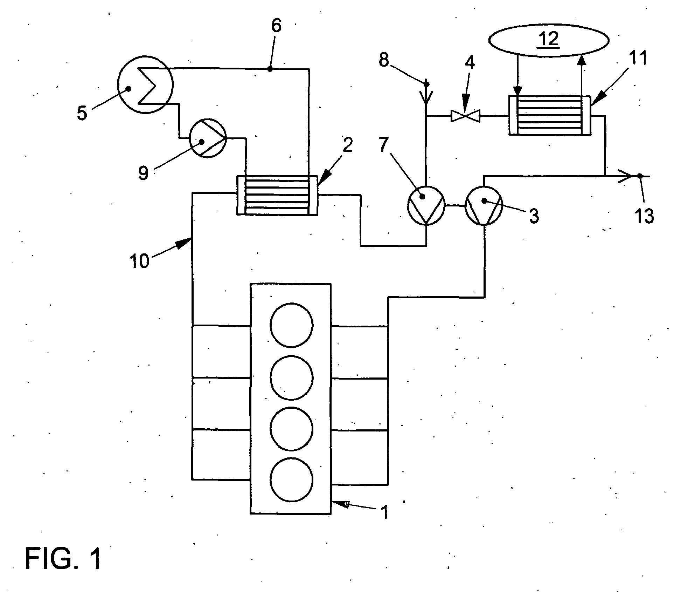

Die Erfindung lässt zahlreiche Ausführungsformen zu. Zur weiteren Verdeutlichung ihres Grundprinzips ist eine davon in der Zeichnung dargestellt und wird nachfolgend beschrieben.

Diese zeigt eine Brennkraftmaschine 1 eines Fahrzeugs mit einer Abgasrückführung 4. Die zum Betrieb der Brennkraftmaschine 1 benötigte Ladeluft wird der Umgebungsluft als Ansaugluft 8 entnommen und mittels eines Verdichters 7 komprimiert. Abhängig von den Anforderungen an die Ladeluft kann dieser vor der Kompression Abgas 13 zugeführt werden. Durch den Verdichtungsvorgang werde die komprimierte Ladeluft stark erwärmt. Damit die erwärmte Ladeluft das für den Betrieb der Brennkraftmaschine 1 ideale Temperaturniveau erreicht, wird die Ladeluft nach der Kompression in dem Verdichter 7 in einem Ladeluftkühler 2 abgekühlt und dann der Brennkraftmaschine 1 zugeführt. Das zum Kühlen notwendige Temperaturgefälle erreicht der Ladeluftkühler 2, indem er von einem Kühlmittel, welches in einem Kühlkreislauf 6 bewegt wird, durchströmt wird. Das Kühlmittel wird in dem Ladeluftkühlers 2 erwärmt und gibt-diese Wärme in einem von Umgebungsluft 3 durchströmten Wärmetauscher 5 wieder ab. Die Umwälzung des Kühlmittels erfolgt mittels einer regelbaren Umwälzpumpe 9. Die Temperatur der Ladeluft wird von einem Temperaturfühler 10 ermittelt. Das aus der Brennkraftmaschine 1 ausströmende Abgas 13 strömt durch eine Abgasturbine 3, die den Verdichter 7 antreibt. Das zur Abgasrückführung 4 bestimmte Abgas 13 wird optional in einem mit dem Motorkühlkreislauf 12 verbundenen Abgaskühler 11 gekühlt, bevor es mit der Ansaugluft vermengt wird.

### Bezugszeichenliste

- 1: Brennkraftmaschine
- 2: Ladeluftkühler
- 3: Abgasturbine
- 4.: Abgasrückführung
- 5: Wärmetauscher

- 6: Kühlkreislauf
- 7.: Verdichter
- 8: Ansaugluft
- 9: Umwälzpumpe
- 10: Temperaturfühler

- 11: Abgaskühler
- 12: Motorkühlkreislauf
- 13.: Abgas

## Patentansprüche

1. Verfahren zum Regeln eines in einem Kühlmittelkreislauf (6) einer Brennkraftmaschine (1) angeordneten, die Ladeluft der Brennkraftmaschine (1) mittels eines Fluids kühlenden Ladeluftkühlers (2), bei dem die Ladeluft zur Kühlung durch den Ladeluftkühler (2) geleitet wird, wobei während des Betriebs der Brennkraftmaschine (1) die Kühlleistung des Ladeluftkühlers (2) in Abhängigkeit zweier Schwellenwerte der Ladelufttemperatur des Ladeluftkühlers (2) eingestellt wird, **dadurch gekennzeichnet, dass** die Brennkraftmaschine (1) mit einer Abgasrückführung (4) ausgerüstet und in einem Fahrzeug angeordnet ist und dass die Ladeluft mit dem rückgeführten Abgas vermischt wird, wobei der Ladeluftkühler (2) in zwei Betriebszuständen, mit maximaler Kühlleistung oder abgeschaltet, betrieben wird.

2. Verfahren nach Anspruch 1, **dadurch gekennzeichnet, dass** die Kühlleistung des Ladeluftkühlers (2) mittels einer regelbaren Umwälzpumpe (9) eingestellt wird.

3. Verfahren nach zumindest einem der vorangehenden Ansprüche, **dadurch gekennzeichnet, dass** die Schwellenwerte der Ladelufttemperatur aus einem Istwert der Ladelufttemperatur und/oder dem Verhältnis des Istwertes der Ladelufttemperätur zu einem Sollwert der Ladelufttemperatur ermittelt wird.

4. Verfahren nach zumindest einem der vorangehenden Ansprüche, **dadurch gekennzeichnet, dass** der Sollwert der Ladelufttemperatur in Abhängigkeit einer Temperatur der Umgebungsluft des Fahrzeugs und einer Temperatur des Kühlmittels festgelegt wird.

5. Verfahren nach zumindest einem der vorangehenden Ansprüche, **dadurch gekennzeichnet, dass** der Betriebszustand des Ladeluftkühlers (2) mittels eines Zweipunktreglers eingestellt wird.

6. Verfahren nach zumindest einem der vorangehenden Ansprüche, **dadurch gekennzeichnet, dass** beim Überschreiten eines ersten Schwellenwertes der Ladelufttemperatur der Ladeluftkühler (2) mit maximaler Kühlleistung betrieben wird.

7. Verfahren nach zumindest einem der vorangehenden Ansprüche, **dadurch gekennzeichnet, dass** beim Unterschreiten eines zweiten Schwellenwertes der Ladelufttemperatur der Ladeluftkühler (2) abgeschaltet wird.

8. Verfahren nach zumindest einem der vorangehenden Ansprüche, **dadurch gekennzeichnet, dass** für die Überwachung ein Wasserbeladungsmodell eingesetzt wird.

9. Verfahren nach zumindest einem der vorangehenden Ansprüche, **dadurch gekennzeichnet, dass** in Abhängigkeit des Wasserbeladungsmodells und/oder der Temperatur der Brennkraftmaschine (1) die Abgasrückführung (4) und die Sollwerte der Ladelufttemperatur angepasst werden.

10. Verfahren nach zumindest einem der vorangehenden Ansprüche, **dadurch gekennzeichnet, dass** mittels des Wasserbeladungsmodells die im Ladeluftkühler (2) gespeicherte Wassermasse insbesondere in Abhängigkeit der Menge der,zugeführten frischen Umgebungsluft, der Temperatur der Umgebungsluft, der Temperatur der Ladeluft sowie der Höhe der Abgasrückführungsrate berechnet wird.

11. Verfahren nach zumindest einem der vorangehenden Ansprüche, **dadurch gekennzeichnet, dass** der Ladeluftkühler (2) durch die durch die Kompression der Ladeluft entstehende und die durch Einleiten von Abgas mitgeführte Wärme erwärmt wird.

12. Verfahren nach zumindest einem der vorangehenden Ansprüche, **dadurch gekennzeichnet, dass** die Ladeluft über einen vom Motorkühlkreislauf (12) separaten Kühlkreislauf (6) auf einen Sollwert gekühlt wird.

## Claims

1. Method for regulating a charge-air cooler (2) which is arranged in a coolant circuit (6) of an internal combustion engine (1) and which cools the charge air of the internal combustion engine (1) with the aid of a fluid, in which method the charge air for cooling is conducted through the charge-air cooler (2), wherein, during the operation of the internal combustion engine (1), the cooling power of the charge-air cooler (2) is set in a manner dependent on two threshold values of the charge-air temperature of the charge-air cooler (2), **characterized in that** the internal combustion engine (1) is equipped with an exhaust-gas recirculation arrangement (4) and is arranged in a vehicle, and **in that** the charge air is mixed with the recirculated exhaust gas, wherein the charge-air cooler (2) is operated in two operating states, with maximum cooling power or deactivated.

2. Method according to Claim 1, **characterized in that** the cooling power of the charge-air cooler (2) is adjusted by way of a regulable circulation pump (9) .

3. Method according to at least one of the preceding claims, **characterized in that** the threshold values of the charge-air temperature are determined from an actual value of the charge-air temperature and/or from the ratio of the actual value of the charge-air temperature to a target value of the charge-air temperature.

4. Method according to at least one of the preceding claims, **characterized in that** the target value of the charge-air temperature is specified in a manner dependent on a temperature of the ambient air around the vehicle and a temperature of the coolant.

5. Method according to at least one of the preceding claims, **characterized in that** the operating state of the charge-air cooler (2) is set by way of a two-position regulator.

6. Method according to at least one of the preceding claims, **characterized in that**, upon the overshooting of a first threshold value of the charge-air temperature, the charge-air cooler (2) is operated with maximum cooling power.

7. Method according to at least one of the preceding claims, **characterized in that**, upon the undershooting of a second threshold value of the charge-air temperature, the charge-air cooler (2) is deactivated.

8. Method according to at least one of the preceding claims, **characterized in that** a water loading model is used for monitoring purposes.

9. Method according to at least one of the preceding claims, **characterized in that** the exhaust-gas recirculation arrangement (4) and the target values of the charge-air temperature are adapted in a manner dependent on the water loading model and/or the temperature of the internal combustion engine (1).

10. Method according to at least one of the preceding claims, **characterized in that**, by means of the water loading model, the water mass stored in the charge-air cooler (2) is calculated in particular in a manner dependent on the supplied flow rate of fresh ambient air, the temperature of the ambient air, the temperature of the charge air and the magnitude of the exhaust-gas recirculation rate.

11. Method according to at least one of the preceding claims, **characterized in that** the charge-air cooler (2) is heated by the heat which is generated as a result of the compression of the charge air and the heat which is carried along by introduction of exhaust gas.

12. Method according to at least one of the preceding claims, **characterized in that** the charge air is cooled to a target value by way of a cooling circuit (6) which is separate from the engine cooling circuit (12).

## Revendications

1. Procédé de réglage d'un refroidisseur d'air de suralimentation (2) installé dans un circuit d'agent de refroidissement (6) d'un moteur à combustion interne (1) et qui refroidit l'air de suralimentation du moteur à combustion interne (1) au moyen d'un fluide, dans lequel on conduit l'air de suralimentation pour le refroidissement à travers le refroidisseur d'air de suralimentation (2), dans lequel on règle, pendant le fonctionnement du moteur à combustion interne (1), la puissance de refroidissement du refroidisseur d'air de suralimentation (2) en fonction de deux valeurs de seuil de la température de l'air de suralimentation du refroidisseur d'air de suralimentation (2), **caractérisé en ce que** le moteur à combustion interne (1) est équipé d'un recyclage de gaz d'échappement (4) et est installé dans un véhicule et **en ce que** l'on mélange l'air de suralimentation avec les gaz d'échappement recyclés, dans lequel on fait fonctionner le refroidisseur d'air de suralimentation (2) dans deux états de fonctionnement, avec une puissance de refroidissement maximale ou coupé.

2. Procédé selon la revendication 1, **caractérisé en ce que** l'on règle la puissance de refroidissement du refroidisseur d'air de suralimentation (2) au moyen d'une pompe de recirculation réglable (9).

3. Procédé selon au moins une des revendications précédentes, **caractérisé en ce que** l'on détermine les valeurs de seuil de la température de l'air de suralimentation à partir d'une valeur réelle de la température de l'air de suralimentation et/ou du rapport entre la valeur réelle de la température de l'air de suralimentation et une valeur de consigne de la température de l'air de suralimentation.

4. Procédé selon au moins une des revendications précédentes, **caractérisé en ce que** l'on fixe la valeur de consigne de la température de l'air de suralimentation en fonction d'une température de l'air ambiant du véhicule et d'une température de l'agent de refroidissement.

5. Procédé selon au moins une des revendications précédentes, **caractérisé en ce que** l'on règle l'état de fonctionnement du refroidisseur d'air de suralimentation (2) au moyen d'un régulateur à deux positions.

6. Procédé selon au moins une des revendications précédentes, **caractérisé en ce que**, en cas de dépassement d'une première valeur de seuil de la température de l'air de suralimentation, on fait fonctionner le refroidisseur d'air de suralimentation (2) à la puissance de refroidissement maximale.

7. Procédé selon au moins une des revendications précédentes, **caractérisé en ce que**, en cas de descente sous une deuxième valeur de seuil de la température de l'air de suralimentation, on coupe le refroidisseur d'air de suralimentation (2).

8. Procédé selon au moins une des revendications précédentes, **caractérisé en ce que** l'on utilise pour la surveillance un modèle de chargement en eau.

9. Procédé selon au moins une des revendications précédentes, **caractérisé en ce que** l'on adapte le recyclage de gaz d'échappement (4) et les valeurs de consigne de la température de l'air de suralimentation en fonction du modèle de chargement en eau et/ou de la température du moteur à combustion interne (1).

10. Procédé selon au moins une des revendications précédentes, **caractérisé en ce que** l'on calcule, au moyen du modèle de chargement en eau, la masse d'eau accumulée dans le refroidisseur d'air de suralimentation (2), en particulier en fonction de la quantité de l'air ambiant frais apporté, de la température de l'air ambiant, de la température de l'air de suralimentation ainsi que de la hauteur du débit de recyclage des gaz d'échappement.

11. Procédé selon au moins une des revendications précédentes, **caractérisé en ce que** l'on chauffe le refroidisseur d'air de suralimentation (2) au moyen de la chaleur dégagée par la compression de l'air de suralimentation et de la chaleur apportée par l'introduction de gaz d'échappement.

12. Procédé selon au moins une des revendications précédentes, **caractérisé en ce que** l'on refroidit l'air de suralimentation à une valeur de consigne au moyen d'un circuit de refroidissement (6) séparé du circuit de refroidissement (12) du moteur.
